Europäisches Patentamt

European Patent Office

Office européen des brevets

(11) Veröffentlichungsnummer: **0 375 835**
**A2**

(12) **EUROPÄISCHE PATENTANMELDUNG**

(21) Anmeldenummer: **89113647.5**

(22) Anmeldetag: **25.07.89**

(51) Int. Cl.⁵: **B08B 15/02**

Die Bezeichnung der Erfindung wurde geändert
(Richtlinien für die Prüfung im EPA, A-III, 7.3).

(30) Priorität: **25.07.88 DE 8809470 U**

(43) Veröffentlichungstag der Anmeldung:
**04.07.90 Patentblatt 90/27**

(84) Benannte Vertragsstaaten:
**DE FR GB IT**

(71) Anmelder: **PROFIL - Jean-Paul Burlet Gmbh
Rodenbacher Strasse 17
D-8755 Alzenau(DE)**

(72) Erfinder: **Burlet, Jean-Paul
Rodenbacher Strasse 17
D-8755 Alzenau(DE)**

(74) Vertreter: **Falge, Dieter, Dr.
Weissenburgerstrasse 34a
D-8750 Aschaffenburg(DE)**

(54) **Schweissschutzvorhang.**

㊼ Der Transmix-Schweißschutzvorhang dient der
Abschirmung von Arbeitsplätzen in Werkhallen oder
im Freien, an denen Gasschweiß - oder Lichtbogenschweißarbeiten durchgeführt werden. Um an ein
und demselben Arbeitsplatz sowohl Gasschweiß- wie
auch Lichtbogenschweißarbeiten ausführen zu können und um dabei den Schutzvorschriften Rechnung
zu tragen, ist der Transmix-Schweißschutzvorhang
so gestaltet, daß er bei variablen Abständen nach
oben oder unten einen mittleren, undurchsichtigen,
in der Breite und Länge ebenfalls variablen Teil
enthält, der Außenstehende vor der beim Lichtbogenschweißen entstehenden Strahlung schützt.
Der obere und untere Teil des Schweißschutzvorhanges besteht aus durchsichtigem Material, wie es
bisher allein beim Gasschweißen verwendet wurde.
Dieses durchsichtige Material ermöglicht Außenstehenden teilweise den Einblick in den abgeschirmten
Arbeitsplatz, wodurch Unfälle oder sonstige Ereignisse - auch beim Elektroschweißen - von außen erkannt werden können.
Während bisher Elektroschweißarbeiten nur hinter
vollständig undurchsichtigen Vorhängen möglich
und durchführbar waren, die keinerlei Einblick von
außen gestatten, kann - bedingt durch die Einsehmöglichkeit von außen - bei Arbeitsunfällen o.ä. im
Rahmen der Durchführung von Elektroschweißarbeiten schnellstmögliche Hilfe und Unterstützung erbracht werden.

## Transmix-Schweißschutzvorhang

Die Erfindung bezieht sich auf einen Abschirm-Schutz-Vorhang für Schweißplätze innerhalb von Werkhallen oder auch im Freien.

Der derzeitige Stand der Technik ist der, daß Arbeitsplätze, an denen Lichtbogenschweißen durchgeführt wir, mit Schweißschutzvorhängen abgeschirmt sein müssen, die der DIN 32504, Teil 1, entsprechen. Diese Vorhänge sind undurchsichtig und verhindern das Austreten schädigender und belästigender optischer Strahlung. Sie verhindern dadurch aber auch die Beobachtung der innerhalb der Schweißkabine tätigen Arbeiter und eventuell sich beim Schweißen ereignende Unfälle. Für das Gasschweißen werden durchsichtige Schweißschutzvorhänge verwendet, die der DIN 32504, Teil 2, entsprechen müssen. Sie sind durchsichtig und erlauben somit den Einblick in die Schweißkabine. Die alleinige Verwendung des durchsichtigen, der DIN 32504, Teil 2, entsprechenden Vorhangs verbietet jedoch, innerhalb einer solchen Kabine Lichtbogenschweißarbeiten durchzuführen. Es müssen deshalb für Lichtbogenschweißen Kabinen mit Schweißschutzvorhängen hergestellt werden, die der DIN 32504, Teil 1, entsprechen.

Die Kritik an der bisher möglichen Gestaltung und Einsetzbarkeit von Schweißkabinen, die lediglich mit durchsichtigen Schweißschutzvorhängen ummantelt sind, die der DIN 32504, Teil 2, entsprechen, richtet sich darauf, daß darin Lichtbogenschweißen nicht zulässig ist. Zwar ist bei Schweißkabinen, die mitundurchsichtigen Vorhängen gemäß DIN 32504, Teil 1, ummantelt sind, Gasschweißen erlaubt, jedoch ist zum einen für Gasschweißen diese nur für Lichtbogenschweißen geforderte Ummantelung nicht notwendig, zum anderen sind die Arbeitsvorgänge hinter den undurchsichtigen Vorhängen nach DIN 32504, Teil 1, für Außenstehende, die bei Arbeitsunfällen eingreifen könnten, nicht einschaubar.

Die Aufgabe der Erfindung besteht darin, die vorstehend genannten Nachteile zu beseitigen und die Möglichkeit zu schaffen, in ein und der selben Schweißkabine die Ausführung von Gasschweißen und Lichtbogenschweißen unter Beachtung der sicherheitstechnischen Anforderungen nach DIN 32504, Teil 1 und Teil 2, zu ermöglichen.

Die Lösung dieser Aufgabe wird dadurch erreicht, daß ein 20 cm breiter, der DIN 32504, Teil 2 (durchsichtig), entsprechender Vorhangstreifen, der den oberen Teil der Vorhangbahn darstellt, mit einem 50 cm breiten, der DIN 32504, Teil 1 (undurchsichtig) entsprechenden Vorhangstreifen fest verschweißt oder verknüpft wird, der wiederum mit einem darunter fest zu verschweißenden oder zu verknüpfenden, 110 cm breiten, der DIN 32504, Teil 2 (durchsichtig) entsprechenden Vorhangstreifen verbunden wird. Aus diesen drei Teilen entsteht eine 180 cm lange und jeweils 140 cm breite Vorhangbahn, die durch seitliche eingeschweißte Kunststoffdruckknöpfe beliebig verlängert und jeder gewünschten Größe einer Schweißkabine gerecht werden kann. Die zweifarbige Vorhangbahn kann abweichend von den vorbeschriebenen Maßen jeden räumlichen oder besonderen betrieblichen Erfordernissen angepaßt werden. Die zur Herstellung der Vorhangbahn verwendeten durchsichtigen und undurchsichtigen Materialien erfüllen die Voraussetzungen der DIN 32504 Teil 2 und 32504 Teil 1.

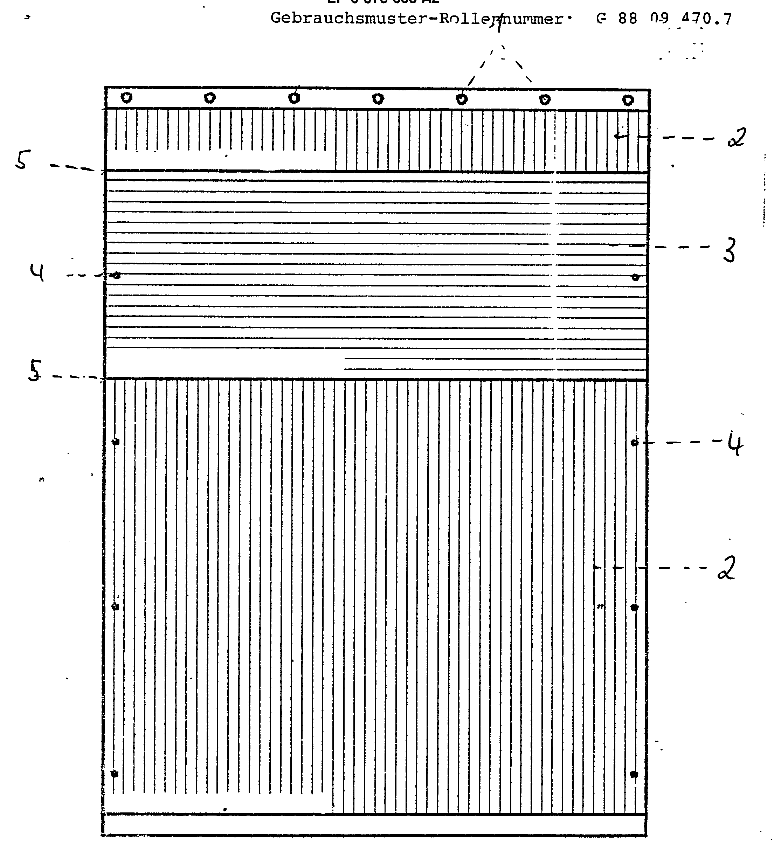

Der Erfindungsgegenstand ist in der beigefügten Zeichnung dargestellt.

Der durch die Erfindung erzielbare Vorteil besteht darin, daß bei Verwendung dieses Vorhangs beide für Gas- und Lichtbogenschweißen existierenden Vorschriften der DIN 32504, Teil 1 und Teil 2, beachtet werden, daß beide Schweißarbeiten in ein und der selben Kabine durchgeführt werden können und daß - anders als bei den bisher verwendeten undurchsichtigen Schweißschutzvorhängen beim Lichtbogenschweißen - hierdurch auch beim Lichtbogenschweißen die Einsichtmöglichkeit in die Schweißka bine gegeben ist mit Ausnahme des für den besonderen beim Lichtbogenschweißen vorgeschriebenen Schutz betreffenden in der Grundausführung 50 cm breiten, jedoch den eventuell gegeberen besonderen örtlichen Bedingungen anpaßbaren, der DIN 32504, Teil 1, entsprechenden Streifens. Unfälle innerhalb der Kabine lassen sich deshalb auch beim Lichtbogenschweißen beobachten. Unfälle, die dadurch entstehen, daß Teile technischer Geräte unter den beim bisherigen Lichtbogerschweißen verwendeten undurchsichtigen Schweißschutzvorhang geraten (Transportarme von Gabelstaplern u.ä.) und die nicht sichtbaren, in der Schweißkabine tätigen Arbeiter verletzen, lassen sich durch die Einsehbarkeit in den unteren Teil der Schweißkabine durch die Erfindung künftig vermeiden.

BEZUGSZEICHENLISTE ZUR ZEICHNUNG "TRANSMIX" - SCHUTZVORHANGS

1 = Aufhängeösen

2 = Schweißschutzvorhang, durchsichtig, entsprechend DIN 32504 Teil 2

3 = Schweißschutzvorhang, undurchsichtig, entsprechend DIN 32504 Teil 1

4 = Druckknöpfe zur Aneinanderreihung von Vorhangbahnen

5 = Schweißnähnte (Verbindungsstellen) zwischen durchsichtigem und undurchsichtigem Vorhangmaterial

## Ansprüche

Schweißschutzvorhang für die Herstellung von Schweißkabinen beliebiger Größe aus zweifarbigen Material, der dadurch gekennzeichnet ist, daß der jeder räumlichen Gegebenheit anpaßbare aus Suspensionspolyvinylchlorid bestehende Vorhang in der Grundausführung in einem oberen, 20 cm breiten Streifen durchsichtig, in einem mit dem oberen Streifen fest verschweißten oder verknüpften darunter befindlichen 50 cm breiten Streifen undurchsichtig und mit einem wiederum fest verschweißten oder verknüpften darunter sich befindlichen 110 cm breiten Streifen wieder durchsichtig ist.